# EUROPEAN PATENT APPLICATION

(11) **EP 3 666 104 A1**
(43) Date of publication of application: **17.06.2020**
(21) Application number: 18844505.0
(22) Date of filing: 09.08.2018
(51) Int. Cl.: A43B 3/16, A43B 23/02

(54) **SOCK STRUCTURE AND MANUFACTURING METHOD THEREOF**

(30) Priority: 09.08.2017 CN 201710675061
(71) Applicant: Qingyuan Global Technology Services Ltd., Qingyuan City, Guangdong 511800 (CN)
(72) Inventor: LUH, Yih-Ping, Taipei City 104 (TW)
(74) Representative: dompatent von Kreisler Selting Werner - Partnerschaft von Patent- und Rechtsanwälten mbB
(86) International application number: PCT/CN2018/099523
(87) International publication number: WO 2019/029595

(57) **Abstract**

The present invention discloses a sock structure and a manufacturing method for the same. The sock structure includes a body and a waterproof layer. The body includes a first end having an opening, and a second end opposite to the first end. The waterproof layer is disposed in a partial area of the second end. After the first end is folded in a direction toward the second end, the waterproof layer is interposed between the first end and the second end.

## Description

### BACKGROUND

### Technical Field

The present invention relates to a sock structure and a manufacturing method for the same, and in particular, to a structure having a waterproof sock and a manufacturing method for the same.

### Related Art

A main function of conventional shoes is to protect feet of humans. With the progress of the times and the change of mass demands, various multi-functional shoes such as leather shoes, sports shoes, sandals, slippers or high-heeled shoes have been developed.

However, apart from taking into account aesthetics of shoes, more and more people begin to consider whether the shoes have other additional functions when purchasing or choosing. For example, when people go out to work or exercise, they occasionally suffer from rain in the way unless rain shoes are prepared in advance. Generally, the conventional shoes do not have a waterproof function. In such cases, rainwater might penetrates into a vamp, such that inconvenience and discomfort are inevitably caused.

### SUMMARY

In view of this, an objective of the present invention is to provide a sock structure. Socks and shoes combined with the socks have a waterproof function through a structure of the waterproof socks.

The sock structure applicable to a shoe structure has a body and a waterproof layer. The body includes a first end having an opening, and a second end opposite to the first end. The waterproof layer is disposed in a partial area of the second end. After the first end is folded in a direction toward the second end, the waterproof layer is interposed between the first end and the second end.

In an embodiment, the waterproof layer is attached to the body through a glue.

In an embodiment, the waterproof layer is formed between the first end and the second end by injection molding.

Another objective of the present invention is to provide a sock structure. Socks and shoes combined with the socks have a waterproof function through a structure of the waterproof socks.

The sock structure applicable to a shoe structure has a body and a waterproof layer. The body includes a first end and a second end opposite to the first end. The waterproof layer is disposed in a partial area of the second end. One side of the first end opposite to the second end is partially separated, and after the first end is folded in a direction toward the second end, the waterproof layer is interposed between the first end and the second end.

In an embodiment, the waterproof layer is attached to the body through a glue.

In an embodiment, the waterproof layer is formed between the first end and the second end by injection molding.

Another objective of the present invention is to provide a manufacturing method for a sock structure. Socks and shoes combined with the socks have a waterproof function by disposing a structure of the waterproof socks.

The manufacturing method includes the following steps: (S1): disposing an opening at a first end of a sock or cutting a first end of a sock to partially separate the first end; (S2): disposing a waterproof layer in a partial area of a second end of the sock; and (S3): folding the first end toward the second end, so that the waterproof layer is interposed between the first end and the second end.

In an embodiment, the step (S2) further includes forming the waterproof layer between the first end and the second end by injection molding.

Additional features and advantages of the present invention may be illustrated in the following description to make the features and the advantages more obvious, or may be learned by practice of the present invention. Other objectives and advantages of the present invention can be implemented and achieved from the structure shown in the specification and claims of the disclosure as well as the appended drawings.

### BRIEF DESCRIPTION OF THE DRAWINGS

FIG. 1A to FIG. 1D are schematic diagrams of an embodiment of a sock structure according to the present invention;
FIG. 2A to FIG. 2D are schematic diagrams of another embodiment of a sock structure according to the present invention;
FIG. 3A to FIG. 3D are schematic diagrams of another embodiment of a sock structure according to the present invention; and
FIG. 4 is a flowchart of an embodiment of a manufacturing method for a sock structure according to the present invention.

### Description of main element symbols:

1. Sock structure; 11. Body.
12. First end; 13. Second end.
14. Waterproof layer; 15. Sewing stitch;
16. Shoe last mold; 2. Sock structure;
21. Body; 22. First end;
23. Second end; 24. Waterproof layer;
22a. Portion; 22b. Portion.

### DETAILED DESCRIPTION

The following describes a plurality of embodiments of the present invention in conjunction with the accompanying drawings. For clear description, many practical details are described in the following description. However, it should be understood that these practical details should be not interpreted as to limit the present invention. In addition, to simplify the accompanying drawings, some existing structures and elements in the accompanying drawings are shown in a simple schematic manner.

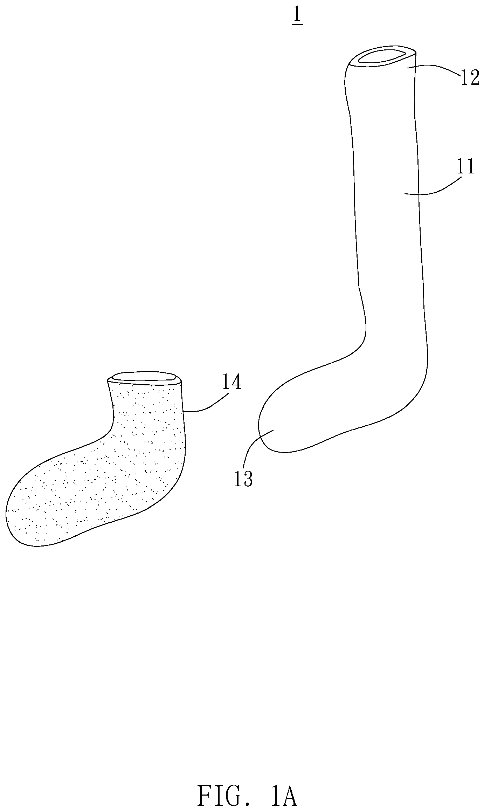

For an embodiment of the present invention, refer to FIG. 1A to FIG. 1D. As shown in FIG. 1A, a sock structure 1 has a body 11 and a waterproof layer 14. The body 11 is preferably a hollow fabric, and may be manufactured by a flat knitting machine or a circular knitting machine. This is not specifically limited. One end of the body 11 has an opening, and the other end opposite to the end is closed, and is, for example, in a form of a general sock. In this embodiment, the end having the opening is defined as a first end 12 and the end having no opening is defined as a second end 13.

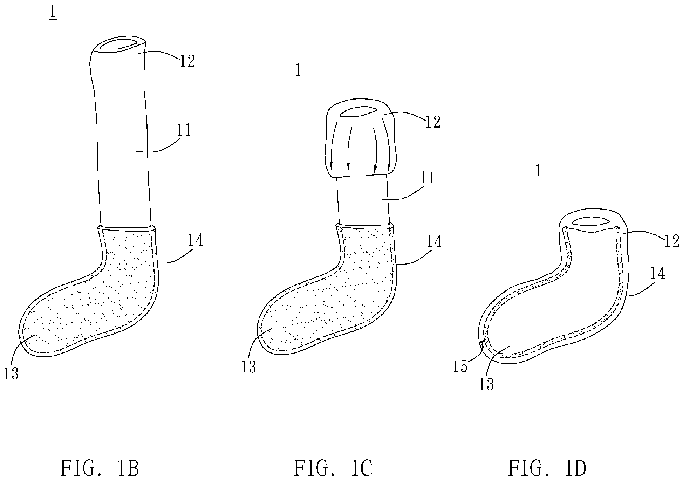

As shown in FIG. 1B, the waterproof layer 14 is disposed in a partial area of the periphery of the second end 13. The waterproof layer 14 may be attached to the periphery of the second end 13 of the body 11 through a glue (adhesive dispensing). The waterproof layer 14 may be made of polyurethane (PU), thermoplastic polyurethane (TPU), thermoplastic elastomer (TPE), or polytetrafluoroethylene (PTFE), or another material having a waterproof function. The glue is preferred but is not limited to use of moisture-curing polyurethane reactive (PUR) hot-melt adhesive.

Next, as shown in FIG. 1C and FIG. 1D, the first end 12 is folded outward. Specifically, the first end 12 is folded in a direction toward the second end 13 until the second end 13 is wrapped. Actually, because the first end 12 has the opening, when being folded to the endpoint, the first end 12 may be closed by stitching (as shown by a sewing stitch 15) or another similar manner.

Finally, the glue and the body 11 may be bonded by heating. As shown in the figure, the waterproof layer 14 is interposed between the first end 12 and the second end 13 of the body 11. In this embodiment, an unfolded portion may be defined as an inner layer (that is, the second end 13), and a folded portion is defined as an outer layer (that is, the first end 12). In this way, the sock structure 1 has the waterproof function, and a user does not directly touch the waterproof layer when wearing the sock, so that a poor touch feeling can be avoided.

In other embodiments, the waterproof layer 14 may alternatively provide the effect of separately bonding the inner layer and the outer layer of the body, so as to increase structural strength.

In actual applications, the completed sock structure 1 may be combined with various types of shoes by weaving or another manner, so as to achieve the waterproof effect.

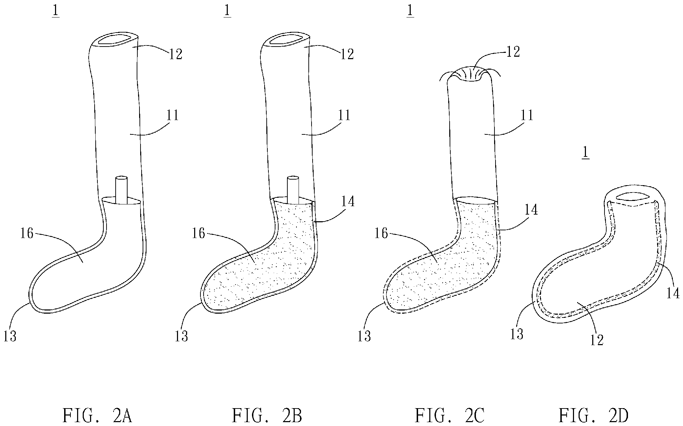

It should be noted that the waterproof layer 14 may be disposed and attached by adhesive dispensing, and in an embodiment, may alternatively be disposed by injection molding. As shown in FIG. 2A to FIG. 2D, a shoe last mold 16 is inserted into a body 1, and a waterproof layer 14 is formed at a second end 13 by injection molding with a relevant device. The shoe last mold 16 is taken out, and a first end 12 is folded inward in a direction toward the second end 13. When being folded to the endpoint, the first end 12 may be closed by stitching or another similar manner. In this embodiment, an unfolded portion is defined as an outer layer (that is, the second end 13), and a folded portion is defined as an inner layer (that is, the first end 12).

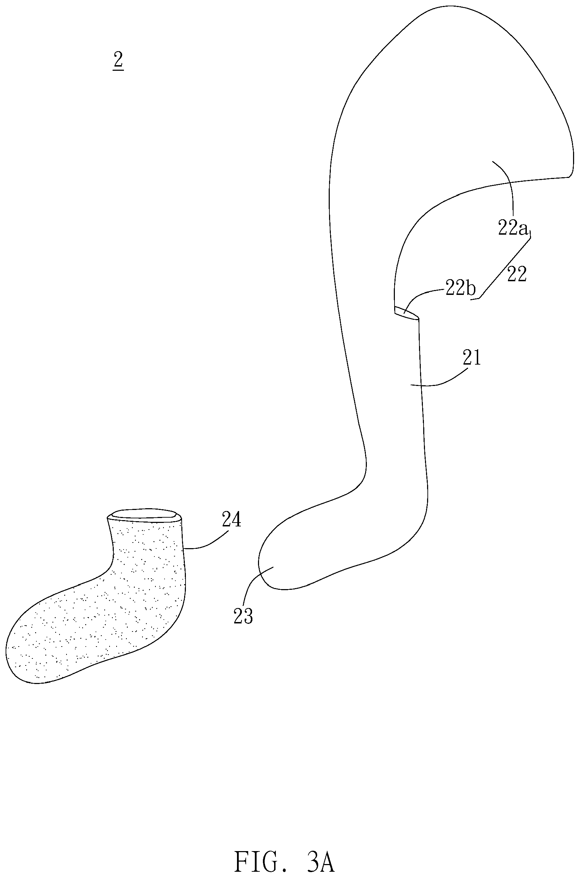

For another embodiment of the present invention, refer to FIG. 3A to FIG. 3D. As shown in FIG. 3A, a sock structure 2 has a body 21 and a waterproof layer 24. The body 21 is preferably a hollow fabric, and may be manufactured by a flat knitting machine or a circular knitting machine. This is not specifically limited. One end of the body is in a partially separated form, and the other end opposite to the end is in a closed form. In this embodiment, the end that is partially separated is defined as a first end 22, and the closed end is defined as a second end 23. Specifically, one side of the first end 22 opposite to the second end 23 may be divided into two portions 22a and 22b, but is not limited thereto. Portion 22a is presented in a form of a one-piece fabric, and portion 22b is presented in a form of a general sock opening.

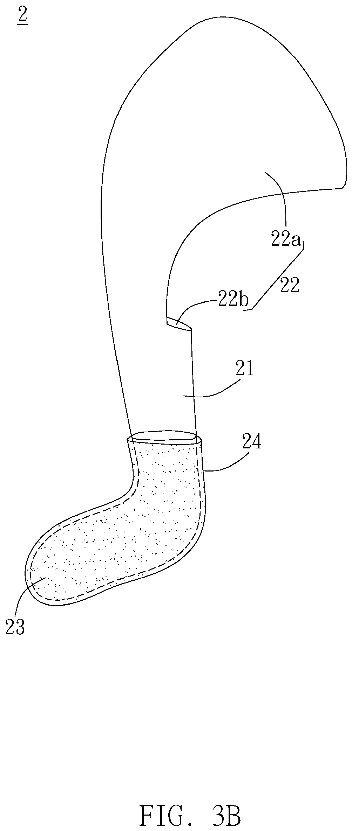

As shown in FIG. 3B, the waterproof layer 24 is disposed in a partial area of the periphery of the second end 23. The waterproof layer 24 may be attached to the periphery of the second end 23 of the body 21 through a glue (adhesive dispensing). The waterproof layer 24 may be made of polyurethane (PU), thermoplastic polyurethane (TPU), thermoplastic elastomer (TPE), or polytetrafluoroethylene (PTFE), or another material having a waterproof function. The glue is preferred but is not limited to use of moisture-curing polyurethane reactive (PUR) hot-melt adhesive.

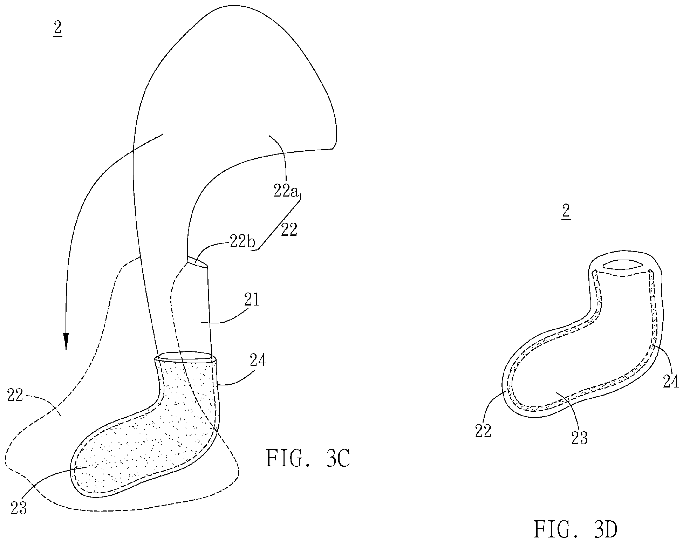

Next, as shown in FIG. 3C and FIG. 3D, the portion 22a of the first end 22 is folded outward. Specifically, portion 22a is folded in a direction toward the second end 23 until the second end 23 is wrapped. Similarly, when being folded to the endpoint, portion 22a and the second end 23 may be sewn together by stitching or another similar manner.

Finally, the glue and the body 21 may be bonded by heating. As shown in FIG. 3D, the waterproof layer 24 is interposed between the first end 22 and the second end 23 of the body 21. In this embodiment, an unfolded portion may be defined as an inner layer (that is, the second end 23), and a folded portion is defined as an outer layer (that is, the first end 22 (portion 22a)). In this way, the sock structure 2 has the waterproof function, and a user does not directly touch the waterproof layer 24 when wearing the sock, so that a poor touch feeling can be avoided. The completed sock structure 2 may be combined with various types of shoes by weaving or another manner, so as to achieve the waterproof effect.

Similarly, the waterproof layer 24 may be attached by adhesive dispensing, and in other embodiments, may be disposed by injection molding.

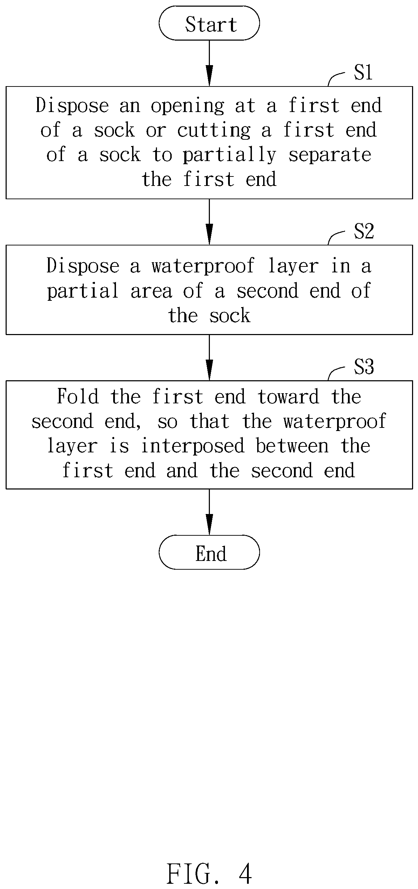

Another embodiment of the present invention is a manufacturing method for the foregoing sock structure. As shown in FIG. 4, the method includes the following steps: (S1): disposing an opening at a first end of a sock or cutting a first end of a sock to partially separate the first end; (S2): disposing a waterproof layer in a partial area of a second end of the sock; and (S3): folding the first end toward the second end, so that the waterproof layer is interposed between the first end and the second end.

The manufacturing method of this embodiment corresponds to the foregoing structure embodiment, and the detailed architecture and manufacturing process of the manufacturing method have been described in detail above. Details are not described herein again.

Compared with the prior art, the sock structure of the present invention has the waterproof function by disposing the waterproof layer, and various shoes combined with the sock structure can also achieve the same waterproof effect.

### Industrial Applicability

The sock structure applicable to the shoe structure in the present invention has the body and the waterproof layer. The body includes the first end having the opening and the second end opposite to the first end. The waterproof layer is disposed in the partial area of the second end. After the first end is folded in a direction toward the second end, the waterproof layer is interposed between the first end and the second end. The socks and the shoes combined with the socks have the waterproof function through a structure of the waterproof socks.

## Claims

1. A sock structure applicable to a shoe body, comprising:
a body, comprising:
a first end having an opening; and
a second end opposite to the first end; and
a waterproof layer, disposed in a partial area of the second end, wherein
after the first end is folded in a direction toward the second end, the waterproof layer is interposed between the first end and the second end.

2. The sock structure according to claim 1, wherein the waterproof layer is attached to the body through a glue.

3. The sock structure according to claim 1, wherein the waterproof layer is formed between the first end and the second end by injection molding.

4. A sock structure applicable to a shoe body, comprising:
a body, comprising:
a first end; and
a second end opposite to the first end; and
a waterproof layer, disposed in a partial area of the second end, wherein
one side of the first end opposite to the second end is partially separated, and after the first end is folded in a direction toward the second end, the waterproof layer is interposed between the first end and the second end.

5. The sock structure according to claim 4, wherein the waterproof layer is attached to the body through a glue.

6. The sock structure according to claim 4, wherein the waterproof layer is formed between the first end and the second end by injection molding.

7. A manufacturing method for a sock structure applicable to a shoe body, comprising the following steps:
(S1): disposing an opening at a first end of a sock or cutting the first end of the sock to partially separate the first end;
(S2): disposing a waterproof layer in a partial area of a second end of the sock opposite to the first end; and
(S3): folding the first end toward the second end, so that the waterproof layer is interposed between the first end and the second end.

8. The manufacturing method for a sock structure according to claim 7, wherein the step (S2) further comprises forming the waterproof layer between the first end and the second end by injection molding.
